Europäisches Patentamt

European Patent Office

Office européen des brevets

(11) Veröffentlichungsnummer: **0 249 137**
**A2**

(12) **EUROPÄISCHE PATENTANMELDUNG**

(21) Anmeldenummer: **87108022.2**

(22) Anmeldetag: **03.06.87**

(51) Int. Cl.⁴: **B01D 21/24**

---

(30) Priorität: **09.06.86 DE 3619357**

(43) Veröffentlichungstag der Anmeldung:
**16.12.87 Patentblatt 87/51**

(84) Benannte Vertragsstaaten:
**CH DE FR GB LI SE**

(71) Anmelder: **BEHRINGWERKE**
**Aktiengesellschaft**
**Postfach 1140**
**D-3550 Marburg 1(DE)**

(72) Erfinder: **Reiche, Asmus, Dr.**
**Auf der Hube 9**
**D-3550 Marburg(DE)**

(74) Vertreter: **Meyer-Dulheuer, Karl-Hermann, Dr.**
**et al**
**HOECHST Aktiengesellschaft Zentrale**
**Patentabteilung Postfach 80 03 20**
**D-6230 Frankfurt/Main 80(DE)**

---

(54) **Verfahren zum Dekantieren einer Flüssigkeit.**

(57) Bei dem Verfahren zum Dekantieren einer Flüssigkeit von einem sedimentierenden Feststoff oder von einer Flüssigkeit, die durch einen darin gelösten Feststoff eine höhere Dichte aufweist, wird die Flüssigkeit mittels einer Absaugvorrichtung, die dem Flüssigkeitsspiegel folgt, abgesaugt. Dabei ist die Absaugöffnung mit einem Schwimmkörper versehen, mit dessen Hilfe die Lage der Absaugöffnung in der Flüssigkeit eingestellt wird.

EP 0 249 137 A2

## Verfahren zum Dekantieren einer Flüssigkeit

Die Erfindung betrifft ein Verfahren zum Dekantieren einer Flüssigkeit von einem sedimentierenden Feststoff oder von einer Flüssigkeit, die durch einen darin gelösten Stoff eine höhere Dichte aufweist, wobei die Absaugöffnung für die Flüssigkeit dem sich ändernden Flüssigkeitsspiegel folgt.

Es ist bekannt Flüssigkeit von sich absetzenden Feststoffteilchen, beispielsweise durch Filtration abzutrennen. Solche Feststoffteilchen haben jedoch oft die Eigenschaft, den Durchfluß durch das Filter in zunehmenden Maße zu behindern, so daß der Filterdruck erhöht werden muß. Schließlich verstopft das Filter völlig und wird undurchlässig. Ein Filterwechsel ist jedoch aufwendig und kann besondere Probleme aufwerfen, wenn steril gearbeitet werden muß, beispielsweise bei der Herstellung pharmazeutisch verwendbarer Stoffe.

Nach der Deutschen Auslegeschrift 1 957 306 ist eine Vorrichtung zum Abziehen eines flüssigen Mediums aus einem Behälter mittels einer Absaugöffnung bekannt, bei der das Absaugrohr mit einem steuerbaren Ventil sowie mit Sensoren zum Einstellen der Lage der Absaugöffnung versehen ist. Diese Vorrichtung ist zum Abziehen einer Flüssigkeitsschicht geeignet, die sich zwischen einer Feststoffschicht und einer überlagerten Schaumschicht befindet. Dabei hat die der Absaugöffnung benachbarte Sensoreinrichtung die Aufgabe, Feststoff in der Flüssigkeit und die etwas höher angeordnete Sensoreinrichtung das Vorhandensein der Flüssigkeit selbst festzustellen. Eine solche Vorrichtung ist jedoch technisch aufwendig und damit auch anfällig.

Ferner sind zum Absaugen einer leichteren Flüssigkeit von Wasser, beispielsweise von Öl Absaugvorrichtungen bekannt, die auf der Flüssigkeitsoberfläche schwimmen und einen Absaugraum mit einem in der Höhe einstellbaren Überlaufwehr aufweisen, damit möglichst nur Öl an die Absaugöffnung gelangt. Auch diese Vorrichtungen sind technisch aufwendig und für das Arbeiten, beispielsweise in einem Produktionsbehälter unter Sterilbedingungen ungeeignet.

Es besteht also die Aufgabe, ein Verfahren zu finden, daß es gestattet, eine Flüssigkeit von einem sedimentierenden Stoff so abzuziehen, daß ein möglichst großer Anteil der Flüssigkeit abgesaugt wird, bevor die Absaugöffnung der Absaugvorrichtung den Feststoff erreicht. Ferner soll das Verfahren unter Sterilbedingungen durchführbar sein.

Die Aufgabe wird durch ein Verfahren gelöst, das dadurch gekennzeichnet ist, daß die Absaugöffnung einer Absaugvorrichtung mit einem Schwimmerkörper versehen ist, mit dessen Hilfe die Lage der Absaugöffnung in der Flüssigkeit eingestellt wird.

Der Vorteil der Erfindung ist im wesentlichen darin zu sehen, daß sie mit Vorrichtungen durchgeführt werden kann, die einfach im Aufbau und einfach im Handhaben sind. Ein weiterer Vorteil ist die Anwendung unter Sterilbedingungen.

Das erfindungsgemäße Verfahren eignet sich besonders gut zum Konzentrieren eines in einer Flüssigkeit gelösten Stoffes. Die Flüssigkeit, die kein oder nur wenig gelöstes Material enthält und deshalb wegen ihrer geringeren Dichte aufschwimmt, wird am Kopf eines Behälters mit der Saugöffnung einer Absaugvorrichtung abgenommen und beispielsweise einer Ultrafiltration zugeführt. Die mit gelöstem Stoff angereicherte Flüssigkeit aus der Ultrafiltration wird in den Behälter zurückgeführt, das geschieht zweckmäßig am Boden, um Vermischung der konzentrierten Flüssigkeit am Boden mit der darüber befindlichen weniger konzentrierten Flüssigkeitsschicht zu vermeiden.

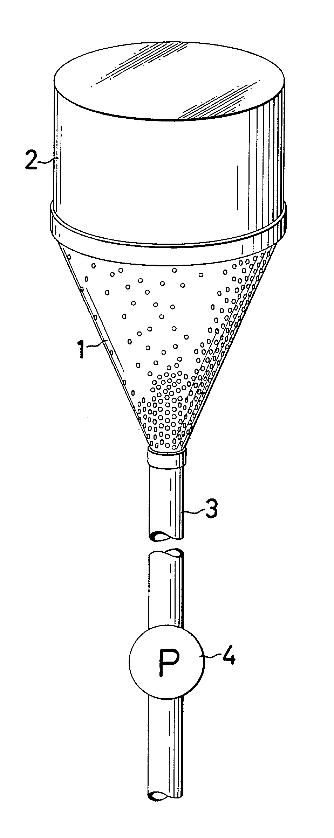

Eine für die Durchführung des Verfahrens geeignete Vorrichtung wird im folgenden anhand der Figur näher erläutert. Die Absaugöffnung 1, z.B. der Siebkorb einer Absaugvorrichtung ist mit einem Schwimmkörper 2 versehen, dessen Auftriebsvermögen eingestellt werden kann. Mit 3 ist ein Schlauch angedeutet, der die Absaugöffnung 1 mit einer Absaugeinrichtung z.B. einer Pumpe 4 verbindet.

**Ansprüche**

Verfahren zum Dekantieren einer Flüssigkeit von einem sedimentierenden Feststoff oder von einer Flüssigkeit, die durch einen darin gelösten Feststoff eine höhere Dichte aufweist, durch Absaugen mittels einer Absaugöffnung, die dem Flüssigkeitsspiegel folgt, dadurch gekennzeichnet, daß die Absaugöffnung einer Absaugvorrichtung mit einem Schwimmerkörper versehen ist, mit dessen Hilfe die Lage der Absaugöffnung in der Flüssigkeit eingestellt wird.